Europäisches Patentamt

**European Patent Office**

**Office européen des brevets**

(11) Publication number: **0 217 650**
**A1**

(12) **EUROPEAN PATENT APPLICATION**

(21) Application number: **86307405.0**

(22) Date of filing: **26.09.86**

(51) Int. Cl.⁴: **G 01 B 7/00**
**G 01 D 5/24**

(30) Priority: **28.09.85 GB 8523982**

(43) Date of publication of application:
**08.04.87 Bulletin 87/15**

(84) Designated Contracting States:
**AT BE CH DE FR GB IT LI LU NL SE**

(71) Applicant: **THORN EMI PLC**
**Thorn Emi House Upper Saint Martin's Lane**
**London, WC2H 9ED(GB)**

(72) Inventor: **Willsher, John**
**2, Slowe Cottages Harlington**
**Polegate Sussex(GB)**

(72) Inventor: **Doe, Ronald**
**86, Mackie Avenue Patcham**
**Brighton Sussex(GB)**

(74) Representative: **Marsh, Robin Geoffrey et al,**
**Thorn EMI Patents Limited The Quadrangle Westmount**
**Centre Uxbridge Road**
**Hayes Middlesex, UB4 0HB(GB)**

(54) Capacitive displacement transducer and a tactile sensor array including a plurality of capacitive displacement transducers.

(57) A capacitive displacement transducer (10) includes first and second tubular electrodes (11,12) arranged in end-to-end relationship on a common axis (22) and a probe (14) displaceable on axis (ZZ) in response to pressure applied to a cap (17). The probe (14) which has no electrical connection modifies the capacitive coupling of the electrodes to an extent dependent on the size of the displacement. A tactile sensor array (1) comprises a plurality of the transducers (10) arranged in a two dimensional configuration.

: 1 :

## CAPACITIVE DISPLACEMENT TRANSDUCER AND A TACTILE SENSOR ARRAY INCLUDING A PLURALITY OF CAPACITIVE DISPLACEMENT TRANSDUCERS

This invention relates to a capacitive displacement transducer and it relates particularly, though not exclusively, to a tactile sensor array including a plurality of capacitive displacement transducers arranged in a two-dimensional configuration.

A known capacitive displacement transducer comprises two cylindrical electrodes arranged concentrically, in interleaved fashion. One of the electrodes can be displaced with respect to the other in response to an applied pressure thereby producing a detectable change in the capacitance of the two electrodes related to the size of the displacement.

A transducer constructed in this way has the disadvantage that an electrical connection must be made to the displaceable electrode. Moreover, the transducer has a relatively large transverse dimension which can be unsatisfactory, especially if the transducer forms part of an array used in applications requiring high spatial resolution in the plane of the array.

It is one object of the present invention, therefore, to provide a tactile sensor array including a different kind of capacitive displacement transducer which at least alleviates the above-described problems.

According to one aspect of the invention there is provided a tactile sensor array including a plurality of capacitive displacement tranducers arranged in a two-dimensional configuration and sensitive to pressure applied to the array orthogonally, wherein each transducer comprises first and second electrodes arranged, in end-to-end relationship, along a direction orthogonal to the array, and a probe member displaceable with respect to the electrodes in response to an applied pressure and being coupled capacitively to the electrodes to an extent which is related, at least in part, to the size of a displacement.

A construction of the kind defined, wherein each displacement transducer includes electrodes arranged in end-to-end relationship, has a relatively small transverse dimension and so enables a relatively close-packed, two-dimensional configuration having high spatial resolution to be produced. Moreover, the probe member, being common to the electrodes, requires no electrical connection.

According to another aspect of the invention there is provided a capacitive displacement transducer comprising first and second tubular electrodes arranged in end-to-end relationship on a common axis and a probe member displaceable axially with respect to said electrodes, the probe member being coupled capacitively to the electrodes to an extent which is related, at least in part, to the size of a displacement.

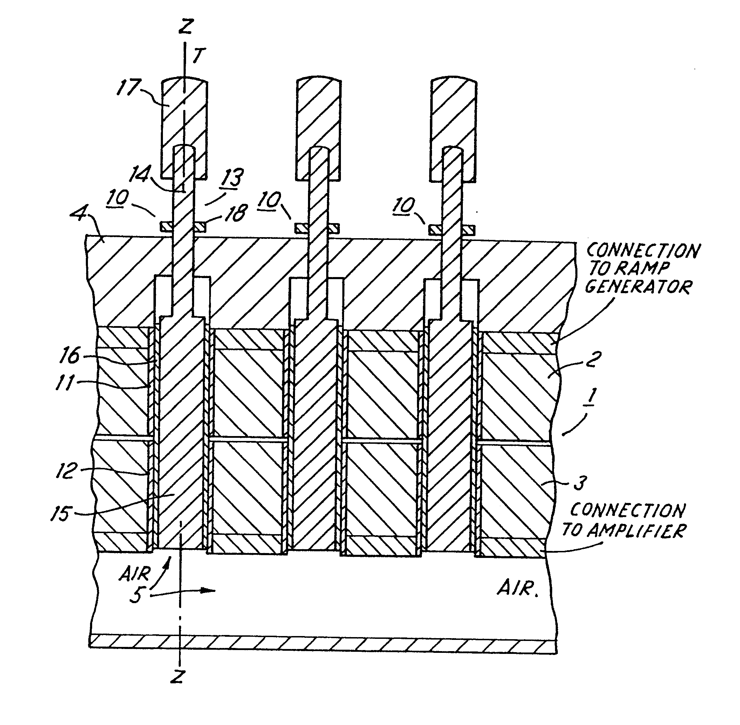

In order that the invention may be carried readily into effect an embodiment thereof is now described by way of example only with reference to the accompanying drawing which shows a cross-sectional view through part of a tactile sensor array in accordance with the present invention.

For clarity of illustration, only three capacitive displacement transducers 10 are shown. In practice, however, the array would typically comprise many such transducers (several hundreds, say) arranged in a two-dimensional configuration. Each transducer is capable of responding to pressure applied to the array orthogonally, the spatial resolution in the plane of the array being dictated largely by the spacing of neighbouring transducers.

0217650

Referring to the drawing, the transducers 10 are supported on a common substrate 1 comprising two sheets 2, 3 of a suitable electrically insulative material. Each transducer includes two cylindrical electrodes 11, 12 arranged in end-to-end relationship on a common axes ZZ, orthogonal to the array. In this example, each electrode consists of a metallisation deposited on the wall of a hole formed in a respective one of sheets 2, 3. Each transducer also includes a probe member 13 displaceable on axis ZZ in response to pressure applied thereto at its tip T. The probe member is in the form of a steel pin having a slender stem 14 and a cylindrical plunger 15 coated with a layer 16 of a dielectric material e.g. pvdf. The plunger is dimensioned to move slidingly in the bore defined by the two electrodes and is effective to modify the capacitance of the transducer. The extent of such modification depends on the axial position of the plunger in the bore which, in turn, depends on the size of a displacement. To reduce electrical interference the stem is fitted with a cap 17 of an electrically insulative material.

The plunger is retained in the bore by means of a cover plate 4, common to all the transducers, and a stop 18 formed on stem 14 limits the travel of the plunger. In this example, the stop is positioned so as to ensure that the plunger overlaps electrode 11 fully at all times thereby to eliminate any ambiguity in a capacitance measurement. It will be appreciated that plunger 15 and the two electrodes 11, 12 function, in effect, as two capacitors connected together in series. The plunger comprises a common electrode and, as such, requires no electrical connection. The effective capacitance of the transducer comprises two components, namely a fixed component $C_F$ due to the overlap of plunger 15 with electrode 11 and a variable component $C_V$ which is related, substantially, linearly, to the degree of overlap of the plunger with electrode 12 which, in turn, depends on the size of a displacement.

In this example, air, supplied under pressure via a network of passageways 5, is directed onto the base of each plunger in the array to bias the respective probe members towards their fully extended (zero displacement) positions. Alternatively, spring biasing means, arranged to act on the base of each plunger, could be provided.

It will be understood that the substrate need not necessarily comprise two distinct sheets; alternatively a single sheet could be used, the electrodes being formed on the wall of a common hole with a suitable insulative material interposed between. Moreover, each probe member, instead of being made of steel, may alternatively comprise a moulded, plastics material pin bearing a layer of an electrically conductive material and an outer coating of a dielectric material. In this case the protective cap could be omitted.

It will be appreciated that a capacitive displacement transducer wherein the electrodes are arranged in end-to-end relationship, as described, may present a relatively small transverse dimension. As such, the transducers may be arranged in close-packed configuration affording improved resolution in the plane of the array. In practice, it has been possible to construct a transducer wherein each electrode is about 6mm long and less than 1mm in diameter; thus, the spacing of neighbouring transducers could be as small as 1 - 2mm. It will therefore be appreciated that an array in accordance with the present invention could be used, with advantage, to derive a high resolution, three-dimensional "image" of an object with which the probe members are brought into contact.

The array may be constructed in a relatively straight forward, cost effective manner, the electrodes, 11, 12 of each transducer being deposited on sheets 2, 3 simultaneously, as in the manufacture of a printed-through circuit board. The capacitance of each transducer may be measured by driving one of the electrodes, 11 say, with a voltage ramp signal and measuring the current induced in the other electrode 12. To this end, electrode 11 is connected to a ramp generator and electrode 12 is connected to one input terminal of a low impedance current amplifier. A square wave, of height proportional to capacitance, is produced at the output of the amplifier in response to an applied ramp waveform. Suitable switching and/or multiplexing circuits, known to those skilled in the art, may be used to connect each transducer in the array to the measurement circuitry in accordance with a desired scanning format.

Transducers of the kind described are especially convenient when incorporated in a large array in that the displaceable probe members 13 require no electrical connection. All connections are made to substrate 1.

It will be appreciated that a tactile sensor array in accordance with the present invention has many applications in the field of automated handling and particularly in applications for which it is necessary to evaluate remotely the shape and/or surface texture of an object under examination.

It will be readily apparent to those skilled in the art that although the invention has been described in detail in relation to a tactile sensor array the invention also embraces a single capacitive displacement transducer of the kind which can be used individually as a displacement sensor.

## CLAIMS

1.  A tactile sensor array including a plurality of capacitive displacement transducers arranged in a two-dimensional configuration and sensitive to pressure applied to the array orthogonally, wherein each transducer comprises first and second electrodes arranged in end-to-end relationship along a direction orthogonal to the array and a probe member displaceable with respect to the electrodes in response to an applied pressure and being coupled capacitively to the electrodes to an extent which is related, at least in part, to the size of a displacement.

2.  A tactile sensor array according to Claim 1 wherein each said electrode comprises a respective tubular metallisation deposited on the wall(s) of a hole or holes in a flat substrate.

3.  A tactile sensor array according to Claim 2 wherein said probe member comprises an electrically conductive pin dimensioned to be displaceable slidingly in the bore defined by said tubular metallisations.

4.  A tactile sensor array according to Claim 3 wherein said pin has a coating of an electrically insulative material.

5.  A capacitive displacement transducer comprising first and second tubular electrodes arranged in end-to-end relationship on a common axis and a probe member displaceable axially with respect to said electrodes, the probe member being coupled capacitively to the electrodes to an extent which is related, at least in part, to the size of a displacement.

6.  A capacitive displacement transducer according to Claim 5 wherein each said electrode comprises a respective tubular metallisation on the wall(s) of a hole or holes in a support body.

7.  A capacitive displacement transducer according to Claim 6 wherein said pin has a coating of an electrically insulative material.

## DOCUMENTS CONSIDERED TO BE RELEVANT

EP 86307405.0

| Category | Citation of document with indication, where appropriate, of relevant passages | Relevant to claim | CLASSIFICATION OF THE APPLICATION (Int. Cl.4) |
|---|---|---|---|
| Y | CH - A5 - 639 754 (VEB ELEKTROMAT) | 1,2 | G 01 B 7/00 |
| X | * Totality * | 5,6 | G 01 D 5/24 |
| | -- | | |
| Y | FR - A - 1 558 161 (PHILIPS) | 1,2 | |
| | * Totality * | | |
| | -- | | |
| Y | US - A - 3 570 003 (WEST) | 1 | |
| X | * Totality * | 5,6 | |
| | -- | | |
| Y | DE - A1 - 3 307 012 (LORD) | 1 | |
| | * Claims 1,2,3; fig. 1,2 * | | |
| | -- | | |
| A | GB - A - 2 078 970 (COMPAGNIE) | | |
| | * Totality * | | |
| | ---- | | |

**TECHNICAL FIELDS SEARCHED (Int. Cl.4)**

G 01 D 5/00
G 01 B 7/00
G 01 B 21/00
H 01 G 5/00

The present search report has been drawn up for all claims

| Place of search | Date of completion of the search | Examiner |
|---|---|---|
| VIENNA | 12-12-1986 | TOMASELLI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82